# EUROPÄISCHE PATENTSCHRIFT

(11) **EP 0 922 950 B1**
(45) Veröffentlichungstag und Bekanntmachung des Hinweises auf die Patenterteilung: **31.07.2002**
(21) Anmeldenummer: 98122033.8
(22) Anmeldetag: 20.11.1998
(51) Int. Cl.: G01M 1/04, G01M 1/16, G01M 1/14

(54) **Verfahren zur Unwuchtbestimmung und Unwuchtmesseinrichtung**
Method for determining unbalance and device for measuring unbalance
Méthode pour déterminer le déséquilibre et dispositif pour mesurer le déséquilibre

(30) Priorität: 08.12.1997 DE 19754321
(43) Veröffentlichungstag der Anmeldung: 16.06.1999
(73) Patentinhaber: Schenck RoTec GmbH, 64293 Darmstadt (DE)
(72) Erfinder: Fischer, Georg, 64823 Gross-Umstadt (DE); Schönfeld, Harald, 64291 Darmstadt (DE); Sulzmann, Herbert, 63322 Rödermark (DE)
(74) Vertreter: Brandt, Ernst-Ulrich, Dipl.-Phys., Dipl.-Ing.

(56) Entgegenhaltungen:
- DE-A- 2 239 523
- DE-A- 3 002 682
- GB-A- 2 320 756
- US-A- 4 495 811
- PATENT ABSTRACTS OF JAPAN vol. 012, no. 413 (P-780), 2. November 1988 (1988-11-02) & JP 63 149535 A (INOUE JAPAX RES INC), 22. Juni 1988 (1988-06-22)
- PATENT ABSTRACTS OF JAPAN vol. 007, no. 015 (P-169), 21. Januar 1983 (1983-01-21) & JP 57 169646 A (TOKYO SHIBAURA DENKI KK), 19. Oktober 1982 (1982-10-19)
- Firmendruckschrift der Carl Schenk AG, "Auswuchten von Elektrobanken in der Serienfertigung, Nr. AB 1077, Abschnitt "Komplette Aggregate", Seite 42

## Beschreibung

Die Erfindung betrifft ein Verfahren zur Unwuchtbestimmung eines Aggregats mit einem in einem Gehäuseelement gelagerten Rotor nach dem Oberbegriff des Patentanspruchs 1 sowie eine Unwuchtmeßeinrichtung für derartige Aggregate nach dem Oberbegriff des Patentanspruchs 7.

Zur Bestimmung der Unwucht derartiger Aggregate sind Unwuchtmeßeinrichtungen wie die in der Firmendruckschrift AB 1077 der Carl Schenck AG "Auswuchten von Elektroankern in der Serienfertigung" auf Seite 42 dargestellte bekannt. Dabei werden Schwingbrücken eingesetzt, auf denen das Aggregat zur Unwuchtbestimmung festgespannt ist. Die Schwingbrücken sind über Federelemente an einer Lagereinrichtung befestigt. Mit Sensoren erfaßte Schwingungssignale und Signale für das Drehverhalten werden einer Auswerteeinrichtung zur Ermittlung des Unwuchtausgleichs zugeführt.

In der DE 19 37 865 B1 ist als Schwingbrücke eine Auflage vorgesehen, auf der das Aggregat befestigt ist. Die Schwingbrücke ist durch Blattfedern an einer Lagereinrichtung befestigt, wobei die mittlere Blattfeder unter der Brückenmitte mit ihren flachen Seiten in Richtung der Rotationsachse des Aggregats zeigend und zwei andere Blattfedern seitlich daneben mit ihren flachen Seiten in Meßrichtung zeigend angeordnet sind. Eine so ausgebildete Unwuchtmeßeinrichtung erfordert einen beträchtlichen Aufwand im Hinblick auf ihre Herstellung.

In der DE-OS 30 11 110 ist die Auflageplatte für das Aggregat beidseitig über mindestens zwei eine Drehbewegung zulassende elastische Gelenke mit einer Lagereinrichtung verbunden. Die Schwingbewegungen der Auflageplatte werden durch zwischen Lagereinrichtung und Auflageplatte eingesetzte Schwingungsaufnehmer erfaßt. Zur Befestigung unterschiedlicher Aggregate sind bei dieser Unwuchtmeßeinrichtung unterschiedliche Spanneinrichtungen erforderlich. Aufgrund der beiderseitigen Abstützung der Schwingbrücke mittels Doppelgelenken, deren Achsen quer zur Rotationsachse des Aggregats verlaufen, hat die bekannte Unwuchtmeßeinrichtung darüberhinaus einen komplizierten Aufbau.

Der Erfindung liegt daher die Aufgabe zugrunde, ein Verfahren zur Unwuchtbestimmung, bei dem einfach und schnell Unwuchten unterschiedlicher Aggregate bestimmt werden können, anzugeben und eine Unwuchtmeßeinrichtung zu schaffen, die kostengünstig herstellbar und kompakt aufgebaut ist.

Erfindungsgemäß wird diese Aufgabe mit den Merkmalen der Patentansprüche 1 und 7 gelöst. Mit der Erfindung ist sichergestellt, daß bei Aggregaten beliebiger Form einfach und schnell eine Unwucht bestimmt werden kann, da die Aggregate unter Zwischenschaltung eines allseits elastischen Polsters auf oder an der Lagereinrichtung angeordnet werden können, z.B. auf die Lagereinrichtung aufgelegt werden können, ohne daß aufwendige Spanneinrichtungen zur Fixierung des Aggregats vorgesehen werden müssen. Bei zu prüfenden Aggregaten mit einem Eigenantrieb werden die dynamischen Eigenschaften des zu prüfenden Aggregats nicht durch angekuppelte Antriebsmassen verfälscht, was besonders vorteilhaft ist bei hohen Betriebsdrehzahlen, die nahe an kritischen Drehzahlen liegen.Die Unwuchtbestimmung erfolgt unter Heranziehung der Gehäuseschwingungen mittels eines kontaktlosen, vorzugsweise die Schwinggeschwindigkeit bestimmenden Schwingungssensors wie z.B. eines nach dem Doppler-Prinzip arbeitenden Laser-Vibrometers oder auch eines Mikrowellen-Sensors. Die erfindungsgemäße Unwuchtbestimmung kann in besonders vorteilhafte Weise die Betriebsbedingungen des Aggregats, z.B. eines in der Hand gehaltenen Elektrowerkzeugs wie z.B. einer Handbohrmaschine oder eines Elektroschleifers berücksichtigen; der Unwuchtausgleich kann gezielt auf Vibrationsarmut im Haltebereich optimiert werden. Die Erfindung läßt sich vorteilhaft auch beim Auswuchten von Aggregaten ohne Eigenantrieb einsetzen, um beispielsweise auch Schwingungen im Befestigungsbereich zu minimieren.

Die Verwendung kontaktloser Schwingungssensoren ist aus der JP 63 149 535 A an sich bekannt. Hier dient ein Laservibrometer sowohl zur Abtastung der Unwuchtschwingungen eines Rotors als auch zum Unwuchtausgleich . Der Rotor ist über beidseitig in federnd gegen ein Fundament abgestützten hülsenförmigen Vibrationslager gelagert. Zur Abtastung der Unwuchtschwingungen ist an einem zusammen mit dem angetriebenen Rotor rotierenden Vibrationslager eine Reflektorschicht für den Laserstrahl vorgesehen. Der nicht in seinem Gehäuseelement gelagerte Rotor kann durch Laserabtragung von Rotormaterial in üblicher Weise am Rotormantel ausgewuchtet werden. Diese Anordnung ist aufgrund der hülsenförmigen Vibrationslager, die auf endseitige Rotorzapfen aufgesetzt sind, sehr aufwendig. Eine Aggregatauswuchtung liegt hier nicht vor.

Die Verwendung von Laser-Vibrometern oder Mikrowellen-Sensoren ist ferner im Zusammenhang mit dem Auswuchten von bereits in Fahrzeugen montierten Kraftfahrzeugantriebssträngen aus der US-Patentschrift 5,431,049 bekannt, jedoch ist hier der Antriebsstrang zum einen am Getriebeausgang des Fahrzeugs und zum anderen am Eingang des Differentials ortsfest gelagert. Die Unwuchtermittlung findet nicht in einer Unwuchtmeßeinrichtung, sondern am Fahrzeug selbst statt und der Antriebsstrang ist nicht unter Zwischenschaltung eines elastischen Lagermittels gelagert.

Die Verwendung von Lasern, insbesondere Laser-Doppler-Vibrometern ist ferner noch beim Auswuchten z.B. elastischer Rotoren aus der US-A- 4 495 811 bekannt, die die Korrelationsbestimmung zwischen der Unwucht eines Rotors in mindestens einer Korrekturebene und dem dadurch hervorgerufenen Meßsignal an einer oder mehreren Rotorlagerungen betrifft, wobei dies bei unterschiedlichen Lagersteifigkeiten durchgeführt wir. Eine Aggregateauswuchtung, d.h. eine Auswuchtung eines in seinem Gehäuseelement gelagerten Rotors, ist hier jedoch weder vorgesehen noch möglich.

Die erfindungsgemäße Lagerung des Aggregats unter Zwischenschaltung eines elastischen Polsters aus z.B. Gummi oder Schaumstoff ist besonders vorteilhaft, da sich ein derartiges allseits elastisches Polster im großen Umfang an die Gehäuseform anpassen kann, und so speziell auf unterschiedliche Aggregate zugeschnittene elastische Lagermittel nicht erforderlich sind. Das Eigengewicht des Aggregats und das Gummi- oder Schaumstoffpolster verhindern im allgemeinen ein Wandern des Aggregats in Bezug auf die Lagereinrichtung auch ohne aufwendige, dem jeweiligen Aggregat angepaßt Spannmittel. Erforderlichenfalls kann aber auch ein elastischer Spanngurt oder ein Schutzbügel zur Sicherung insbesondere beim Beschleunigungsvorgang eingesetzt werden.

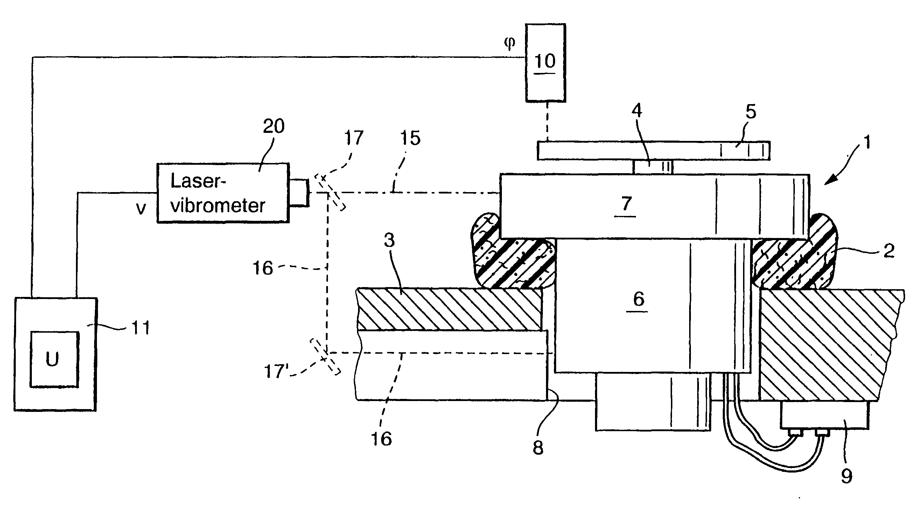

Die Erfindung wird nachfolgend anhand eines in der Zeichnung dargestellten Ausführungsbeispiels näher erläutert.

In der Zeichnung ist mit 1 das zu prüfende Aggregat bezeichnet,
das über ein elastisches Lagermittel 2 in Form eines allseits elastischen Schaumstoffpolsters an einer ortsfesten Lagereinrichtung 3 (Lagerplatte) gelagert ist. Das Aggregat 1 ist im skizzierten Beipiel ein Staubsaugermotor mit dem auf der Rotorwelle 4 sitzendem Gebläserad 5; das Gehäuseelement 6 wird durch den Stator des Motors gebildet. Das Aggregat 1 drückt das elastische Schaumstoffpolster etwas zusammen, so daß Konturbereiche des Aggregats 1 im Schaumstoffpolster gelagert sind. Die Lagerplatte 3 stützt das Schaumstoffpolster ab und weist im Beispiel eine Ausnehmung 8 für das Aggregat 1 auf, so daß keine direkte Auflage von Gehäusebereichen des Aggregats 1 auf oder an der Lagerplatte 3 erfolgt. Das Aggregat 1 wird über seine elektrischen Stromversorgungsleitungen an eine in der Unwuchtmeßeinrichtung, im Beispiel an der Lagerplatte 3, vorgesehene Stromversorgungseinheit 9 angeschlossen, so daß der Eigenantrieb des Aggregats 1 den Rotor 4, 5 auf Betriebsdrehzahl oder auch auf eine darunterliegende Drehzahl bringen kann.

Zur Erfassung des Drehverhaltens des Rotors 4, 5 ist eine Sensoreinrichtung 10 vorgesehen, die ein Referenzsignal ϕ für die Phasenwinkelbestimmung der Unwucht an die Auswerteeinrichtung 11 liefert. Die Sensoreinrichtung liefert ferner ein Signal für die Drehzahl des Rotores 4, 5 an die Auswerteeinrichtung 11. Der Auswerteeinrichtung 11 wird weiter ein Signal v zugeführt, das ein der Schwinggeschwindigkeit einer dem Gebläserad 5 benachbarten Gehäusestelle proportionales Signal ist und das von einem Laser-Vibrometer als Schwingungssensor 20 abgeben wird.

Das Laser-Vibrometer arbeitet nach dem Doppler Prinzip und ist als handelsübliches Schwingungserfassungsgerät beispielsweise von der Firma Polytec GmbH, Waldbronn, DE erhältlich. Der strichpunktiert angedeutete Laserstrahl 15 ist auf die dem Gebläserad 5 benachbarte Gehäusestelle gerichtet. Die einzige Ausgleichsebene zum Unwuchtausgleich liegt im Beispiel im Gebläserad 5, so daß diese eine Meßebene ausreicht. Die Unwuchtmeßeinrichtung wird in üblicher Weise bezüglich der Unwuchtwirkungen an einer Ausgleichsebene kalibriert. Wahlweise können auch zwei Gehäusestellen abgetastet werden, wie dies durch die gestrichelte Laserstrahlführung 16 über zwei im Winkel angeordnete Spiegel 17,17' angedeutet ist; es kann stattdessen natürlich auch das Laser-Vibrometer in die andere Stellung gebracht werden oder ein zweites Laser-Vibrometer vorgesehen werden. Die Abtastung an zwei Gehäusestellen bei nur einer vorhandenen Ausgleichsebene ist dann angezeigt, wenn die Schwingungen des gesamten Aggregats erfaßt werden sollen und ein Unwuchtausgleich vorgenommen werden soll, mit dem die Schwingungen oder Vibrationen in einem Bereich minimiert werden, in dem sie besonders störend sind, beispielsweise bei von Hand gehaltenen Aggregaten im Bereich der Schwerpunktlage oder dem Haltebereich oder bei im Betrieb befestigten Aggregaten im Befestigungsbereich.

Bei Schwingungsmessungen in zwei Meßebenen nacheinander gelten die Regeln des betriebmäßigen Auswuchtens wie sie beispielweise in der Veröffentlichung Federn, Auswuchttechnik, Bd 1, Springer Verlag 1977, Kap. 4 festgehalten sind.

Die Auswerteeinrichtung 11 ist ein herkömmliches Unwuchtmeßgerät z. B. CAB 750 der Fa. Carl Schenck AG, Darmstadt, DE. Es kann jedoch auch eine Auswertung in einem PC vorgesehen werden.

## Patentansprüche

1. Verfahren zur Unwuchtbestimmung eines Aggregats (1) mit einem in einem Gehäuseelement (6) gelagerten Rotor (4,5) in einer Unwuchtmeßeinrichtung, bei dem das Aggregat (1) mit dem Gehäuseelement (6) über ein elastisches Lagermittel (2) an einer Lagereinrichtung (3) gelagert wird und der Rotor (4,5) in Rotation versetzt wird, bei dem das Drehverhalten der Rotors (4,5) erfaßt wird, bei dem Schwingungen erfaßt werden, und bei dem die Schwingungssignale mit das Drehverhalten des Rotors charakterisierenden Signalen einer Auswerteeinrichtung (11) zugeleitet werden, **dadurch gekennzeichnet, dass** als elastisches Lagermittel ein elastisches Polster (2) verwendet wird und die Schwingungserfassung an zumindest einer Stelle des Gehäuseelements (6) und mit zumindest einem kontaktlosen Schwingungssensor (20) erfolgt und dass eine optimale Ausgleichsunwucht nach Größe und Lage bestimmt wird.

2. Verfahren nach Anspruch 1, **dadurch gekennzeichnet, dass** der Rotor (4,5) vom Eigenantrieb des Aggregats (1) in Rotation versetzt wird.

3. Verfahren nach Anspruch 1 oder Anspruch 2, **dadurch gekennzeichnet, dass** zur Unwuchtbestimmung der Rotor (4, 5) auf seine Betriebsdrehzahl gebracht wird.

4. Verfahren nach einem der vorhergehenden Ansprüche, **dadurch gekennzeichnet, daß** die Schwingungen über ein Laser-Vibrometer erfaßt werden.

5. Verfahren nach einem der vorhergehenden Ansprüche, **dadurch gekennzeichnet, daß** das Aggregat (1) durch sein Eigengewicht und das elastische Polster auf der Lagereinrichtung (3) fixiert wird.

6. Verfahren nach einem der vorhergehenden Ansprüche, **dadurch gekennzeichnet, daß** die Schwingungen an einer für die Schwingungsbeurteilung maßgeblichen Stelle oder Ebene abgetastet werden.

7. Unwuchtmeßeinrichtung für ein Aggregat (1) mit einem in einem Gehäuseelement (6) gelagerten Rotor (4,5), die eine Lagereinrichtung (3) und ein zwischen Lagereinrichtung (3) und Gehäuseelement (6) angeordnetes elastisches Lagermittel (2) aufweist, mit zumindest einem Schwingungssensor (20), einem Sensor (10) zur Erfassung des Drehverhaltens des Rotors (4,5) und mit einer Auswerteeinrichtung (11), die mit dem zumindest einen Schwingungssensor (20) und dem Sensor (10) für das Drehverhalten des Rotors (4,5) verbunden ist, **dadurch gekennzeichnet, dass** das Lagermittel (2) als elastisches Polster ausgebildet ist und der zumindest eine Schwingungssensor (20) zur kontaktlosen Abtastung ausgebildet und zumindest einer Stelle des Gehäuseelements (6) zuordenbar ist und die Auswerteeinrichtung (11) eine optimale Ausgleichsunwucht nach Größe und Lage angibt.

8. Einrichtung nach Anspruch 7, **dadurch gekennzeichnet, daß** der Schwingungssensor (20) ein Laser-Vibrometer ist.

9. Einrichtung nach einem der vorhergehenden Ansprüche, **dadurch gekennzeichnet, daß** das Lagermittel (2) ein Gummioder Schaumstoffpolster ist.

10. Einrichtung nach Anspruch 9, **dadurch gekennzeichnet, daß** das Gummi- oder Schaumstoffpolster Oberflächenbereiche mit höherem Reibungskoeffizienten aufweist.

## Claims

1. A method of determining the unbalance of an assembly (1) comprising a rotor (4, 5) mounted in a housing element (6) in an unbalance measuring device wherein the assembly (1) including the housing element (6) is mounted on a bearing device (3) via a resilient bearing means (2) and the rotor (4, 5) is set in rotation, wherein the rotational behaviour of the rotor (4, 5) is established, wherein the vibrations are detected and wherein the vibratory signals together with signals characteristic of the rotational behaviour of the rotor are supplied to an evaluating device (11), **characterised in that** a resilient bearing means in the form of a resilient pad (2) is used and the detection of the vibrations is effected at at least one position of the housing element (6) by means of at least one non-contact making vibration sensor (20), and **in that** an optimal magnitude and location for the compensation of the unbalance is determined.

2. A method in accordance with Claim 1, **characterised in that** the rotor (4, 5) is set in rotation by the self-driving means of the assembly (1).

3. A method in accordance with Claim 1 or 2, **characterised in that** the rotor (4, 5) is brought up to its operational speed for the purposes of determining the unbalance.

4. A method in accordance with any of the preceding Claims, **characterised in that** the vibrations are detected by means of a laser vibrometer.

5. A method in accordance with any of the preceding Claims, **characterised in that** the assembly (1) is fixed on the bearing device (3) by virtue of its own weight and the resilient pad.

6. A method in accordance with any of the preceding Claims, **characterised in that** the vibrations are sampled at a location or plane that is decisive for the assessment of the vibration.

7. An unbalance measuring device for an assembly (1) comprising a rotor (4, 5) mounted in a housing element (6) wherein the device comprises a bearing device (3) and a resilient bearing means (2) arranged between the bearing device (3) and the housing element (6), at least one vibration sensor (20), a sensor (10) for detecting the rotational behaviour of the rotor (4, 5), and an evaluating device (11) which is connected to the at least one vibration sensor (20) and to the sensor (10) for the rotational behaviour of the rotor (4, 5), **characterised in that** the bearing means (2) is in the form of a resilient pad and the at least one vibration sensor (20) is adapted for non-contact making sampling and is associable with at least one position of the housing element (6), and **in that** the evaluating device (11) indicates an optimal magnitude and location for the compensation of the unbalance.

8. A device in accordance with Claim 7, **characterised in that** the vibration sensor (20) is a laser vibrometer.

9. A device in accordance with any of the preceding Claims, **characterised in that** the bearing means (2) is a rubber or foam pad.

10. A device in accordance with Claim 9, **characterised in that** the rubber or foam pad comprises surface regions of higher coefficient of friction.

## Revendications

1. Procédé de détermination du déséquilibre d'un groupe (1) comportant un rotor (4, 5) monté dans un élément de carter (6), dans un dispositif de mesure du déséquilibre, dans lequel le groupe (1) est monté, avec l'élément de carter (6), sur un dispositif de support (3), par l'intermédiaire d'un moyen de support élastique (2), et le rotor (4, 5) est mis en rotation, dans lequel le comportement en rotation du rotor (4, 5) est détecté, dans lequel des oscillations sont détectées, et dans lequel les signaux d'oscillation sont acheminés, avec des signaux caractérisant le comportement en rotation du rotor, vers un dispositif d'exploitation (11), **caractérisé en ce qu'**on utilise comme moyen de support élastique un coussin élastique (2), et la détection des oscillations s'effectue en au moins un emplacement de l'élément de carter (6) et avec au moins un capteur d'oscillations (20) sans contact, et **en ce qu'**on détermine un déséquilibre de compensation optimal quant à la grandeur et la position.

2. Procédé selon la revendication 1, **caractérisé en ce que** le rotor (4, 5) est mis en rotation par le propre dispositif d'entraînement du groupe (1).

3. Procédé selon la revendication 1 ou 2, **caractérisé en ce que** pour déterminer le déséquilibre, le rotor (4, 5) est amené à sa vitesse de rotation de fonctionnement.

4. Procédé selon l'une des revendications précédentes, **caractérisé en ce que** les oscillations sont détectées au moyen d'un vibromètre à laser.

5. Procédé selon l'une des revendications précédentes, **caractérisé en ce que** le groupe (1) est fixé sur le dispositif de support (3) par son propre poids et par le coussin élastique.

6. Procédé selon l'une des revendications précédentes, **caractérisé en ce que** les oscillations sont analysées en un emplacement ou un plan qui est déterminant pour apprécier les oscillations.

7. Dispositif de mesure de déséquilibre pour un groupe (1) comportant un rotor (4, 5) monté dans un élément de carter (6), qui comporte un dispositif de support (3) et un moyen de support élastique (2) disposé entre le dispositif de support (3) et l'élément de carter (6), avec au moins un capteur d'oscillations (20), un capteur (10) destiné à détecter le comportement en rotation du rotor (4, 5) et avec un dispositif d'exploitation (11) qui est relié au ou aux capteurs d'oscillations (20) et au capteur (10) du comportement en rotation du rotor (4, 5), **caractérisé en ce que** le moyen de support (2) est réalisé en tant que coussin élastique et le ou les capteurs d'oscillations (20) sont conçus pour l'analyse sans contact et peuvent être associés à au moins un emplacement de l'élément de carter (6), et le dispositif d'exploitation (11) indique un déséquilibre de compensation optimal quant à la grandeur et la position.

8. Dispositif selon la revendication 7, **caractérisé en ce que** le capteur de vibrations (20) est un vibromètre à laser.

9. Dispositif selon l'une des revendications précédentes, **caractérisé en ce que** le moyen de support (2) est un coussin en caoutchouc ou en mousse.

10. Dispositif selon la revendication 9, **caractérisé en ce que** le coussin en caoutchouc ou en mousse présente des zones de surface avec un coefficient de friction plus élevé.
